# EUROPÄISCHE PATENTSCHRIFT

(11) **EP 2 748 100 B1**
(45) Veröffentlichungstag und Bekanntmachung des Hinweises auf die Patenterteilung: **27.09.2017**
(21) Anmeldenummer: 12744020.4
(22) Anmeldetag: 10.08.2012
(51) Int. Cl.: F03D 13/20

(54) **BAUTEIL EINER WINDKRAFTANLAGE MIT EINER AUFNAHME ZUR HANDHABUNG DES BAUTEILS SOWIE TRAGBALKEN ZUR HANDHABUNG VON BAUTEILEN EINER WINDKRAFTANLAGE**
COMPONENT OF A WIND ENERGY INSTALLATION WITH A RECEPTACLE FOR HANDLING THE COMPONENT AND SUPPORTING BEAM FOR HANDLING COMPONENTS OF A WIND ENERGY INSTALLATION
COMPOSANT D'ÉOLIENNE AVEC LOGEMENT RÉCEPTEUR POUR LA MANUTENTION DU COMPOSANT, AINSI QUE POUTRE DE LEVAGE POUR LA MANUTENTION DE COMPOSANTS D'ÉOLIENNE

(30) Priorität: 25.08.2011 DE 102011052994
(43) Veröffentlichungstag der Anmeldung: 02.07.2014
(73) Patentinhaber: Max Bögl Wind AG, 92369 Sengenthal (DE)
(72) Erfinder: BÖGL, Johann, 92369 Sengenthal (DE)
(74) Vertreter: Bergmeier, Werner
(86) Internationale Anmeldenummer: PCT/EP2012/065744
(87) Internationale Veröffentlichungsnummer: WO 2013/026723

(56) Entgegenhaltungen:
- EP-A2- 0 832 840
- DE-A1-102010 025 840
- US-A1- 2008 290 676

## Beschreibung

Die vorliegende Erfindung betrifft ein Bauteil einer Windkraftanlage, insbesondere ein Turmsegment einer Windkraftanlage, mit einer Aufnahme zur Handhabung des Bauteils nach der Herstellung und bei der Montage oder Demontage, welche mit einem an einem Tragbalken angeordneten Verriegelungsbolzen, beispielsweise einer Hammerkopfwelle, zu einer Verbindungsvorrichtung verbindbar ist. Weiterhin betrifft die Erfindung einen Tragbalken zur Handhabung von Bauteilen einer Windkraftanlage bei der Montage mit einem Verriegelungsbolzen, welcher mit einer an dem Bauteil angeordneten Aufnahme zu einer Verbindungsvorrichtung verbindbar ist.

Zur Konstruktion, zur Herstellung sowie zur Aufstellung von Windkrafttürmen am Einbauort sind im Stand der Technik eine Vielzahl verschiedener Verfahren bekannt geworden. So können Türme von Windkraftanlagen als Stahlrohrtürme ausgeführt werden, bei welchen eine Vielzahl von Stahlrohrschüssen durch Schrauben miteinander verbunden werden oder die Turmbauwerke können als Spannbetontürme ausgeführt werden. Hierbei sind Konstruktionen in Ortbeton sowie in Fertigteilbauweise bekannt. Weiterhin sind Hybridtürme mit einem unteren Turmabschnitt aus Beton sowie einem oberen Turmabschnitt aus Stahl bekannt geworden.

Bei der Herstellung von Türmen aus vorgefertigten Bauteilen sind aufgrund der heutigen Anlagengröße mit hohen Leistungen von mehreren Megawatt und Nabenhöhen von über 100 Metern große Herausforderungen sowohl bezüglich des Transports der Bauteile zum Einbauort, als auch bezüglich der Montage und des Handlings der Bauteile auf der Baustelle zu bewältigen. Zur Montage der vorgefertigten Turmsegmente am Einbauort müssen diese sicher von leistungsfähigen Kranen aufgenommen werden und auf entsprechende Höhen gesetzt werden. Hierzu werden beispielsweise Tragplatten mit den Enden des jeweils zu hebenden Turmsegments verschraubt, wobei an den Tragplatten schwenkbare Schäkelhaken oder Haltebügel angeschweißt sind. Trotz der Beweglichkeit der Haltebügel kann es bei der Aufnahme der Turmsegmente mit dem Kran jedoch zu unkontrollierten Bewegungen des jeweils zu hebenden Turmelements kommen. Das Einschrauben sowie das Entfernen dieser Lastaufnahmeeinrichtungen nach der Montage ist darüber hinaus vergleichsweise zeitaufwändig.

Die EP 1 597 187 B1 schlägt eine ähnliche Lastaufnahmevorrichtung vor, bei welcher der Haltebügel mit seinem Drehteil derart an einer Lastaufnahme angeordnet sein soll, dass Kollisionen zwischen dem Haltebügel, dem am Haltebügel angreifenden Hebezeug und der aufzunehmenden Last vermieden werden. Die Befestigung dieser Lastaufnahmeeinrichtung erfolgt ebenso wie bei den vorbeschriebenen Haltebügeln durch ein Verschrauben der Lastaufnahmeplatte in den Endflanschen der jeweiligen Turmsegmente.

Die DE 10 2010 025 840 A1 beschreibt ein Transportsystem mit einem Transportrahmen, einem Tragbalken sowie einer Verbindungsvorrichtung, welches sowohl beim Transport als auch bei der Montage von Komponenten von Windkraftanlagen eingesetzt werden kann. Jedes Turmsegment wird hierzu an seinen Enden mit jeweils einem weiblichen Element und einem männlichen Element versehen. Ein männliches und ein weibliches Elementteil sind jeweils zu einer Verbindungsvorrichtung miteinander verbindbar, welche zusätzlich durch ein Verriegelungselement verriegelbar ist. Die Tragbalken sowie die Transportrahmen weisen ebenfalls wiederum männliche oder weibliche Elemente oder zumindest Teile davon auf, um mit der vorbeschriebenen Verbindungsvorrichtung kompatibel zu sein. Das männliche und das weibliche Element der Verbindungsvorrichtung bilden zugleich Flansche für die Stirnseiten der Turmsegmente, welche der Verbindung der Turmsegmente untereinander dienen. Hierzu beinhaltet das männliche Element eine Vielzahl von Gewindestiften, welche durch Bohrungen des weiblichen Elements hindurchgreifen und dort mit Muttern festgelegt werden können. Das System ist vergleichsweise aufwändig und nur für Stahlrohrtürme geeignet, bei welchen die einzelnen Turmsegmente ohnehin mit Flanschen zur Verbindung untereinander versehen werden.

Die EP 0 832 840 A2 beschreibt eine Vorrichtung zum Anheben vorgefertigter Bauteile. Dabei wird ein weibliches Element in das Bauteil eingegossen, welches zum Anheben des Bauteils dann mit einem männlichen Element an der Hebevorrichtung verbunden werden kann. Um eine gute Verbindung mit dem Werkstoff des Bauteils zu erzielen, weist das weibliche Element eine Ankerregion auf.
Aufgabe der vorliegenden Erfindung ist es, ein Bauteil mit einer Lastaufnahmevorrichtung sowie einen Tragbalken vorzuschlagen, welches in einfacher und sicherer Weise die Handhabung von Bauteilen einer Windkraftanlage beim Transport und bei der Montage ermöglichen.

Die Aufgabe wird gelöst mit den Merkmalen der unabhängigen Ansprüche.

Ein Bauteil einer Windkraftanlage, insbesondere ein Turmsegment einer Windkraftanlage weist eine Aufnahme zur Handhabung des Bauteils bei der Montage auf, welches mit einem an einen Tragbalken angeordneten Verriegelungsbolzen, beispielsweise einer Hammerkopfwelle, zu einer Verbindungsvorrichtung verbindbar ist. Erfindungsgemäß ist die Aufnahme fest mit dem Bauteil der Windkraftanlage verbunden und weist eine durch eine Ausnehmung definierte Öffnungsstellung sowie eine im Wesentlichen um 90° zu der Öffnungsstellung versetzte Verriegelungsstellung mit einem Käfig für den aufzunehmenden Verriegelungsbolzen auf. Dadurch, dass die Aufnahme bereits bei der Herstellung des Bauteils bei der Windkraftanlage fest in diese integriert werden kann, entfallen beim Abtransport sowie bei der Montage auf der Baustelle aufwändige Arbeiten zum Befestigen der Lastaufnahmevorrichtung an dem Bauteil sowie nach erfolgtem Aufstellen des Turms der Windkraftanlagen die Demontage der Aufnahme. Zur Handhabung der Bauteile der Windkraftanlage, insbesondere der Turmsegmente einer Windkraftanlage, ist ein Tragbalken vorgesehen, welcher einen Verriegelungsbolzen aufweist, welcher mit einer an dem Bauteil angeordneten Aufnahme zu einer Verbindungsvorrichtung verbindbar ist. Erfindungsgemäß ist zur Verriegelung der Verbindungsvorrichtung der Verriegelungsbolzen zwischen einer Öffnungsstellung und einer im Wesentlichen um 90° versetzten Verriegelungsstellung um seine vertikale Achse drehbar.

Während bei den bekannten Lastaufnahmeeinrichtungen des Stands der Technik ein Bügel schwenkbar bzw. drehbar mit einer Lastaufnahmeplatte mit dem Bauteil verbunden ist und hierdurch stets, insbesondere beim Aufnehmen der Last, die Gefahr unkontrollierter Bewegungen des aufzunehmenden Bauteils besteht, kann durch die nun fest in dem Bauteil eingegossene Aufnahme eine besonders sichere Lastaufnahme erfolgen. Weiterhin können durch das feste Eingießen die Aufnahmen in einer vorbestimmten, für die Lastaufnahme günstige Position in das Bauteil eingegossen werden, so dass mittels des erfindungsgemäßen Tragbalkens eine sichere Aufnahme und Handhabung der Bauteile möglich ist. Zum Aufnehmen der Last ist der Tragbalken mit dem Verriegelungsbolzen hierbei lediglich derart in Bezug auf das Bauteil zu positionieren, dass der Verriegelungsbolzen durch eine Drehbewegung in seine Verriegelungsstellung in der Aufnahme bewegbar ist. Nach der erfolgten Montage des Bauteils kann die Verbindungsvorrichtung durch einfaches Verbringen des Verriegelungsbolzens in seine Öffnungsstellung gelöst werden, wobei eine Demontage der Lastaufnahmevorrichtung wie im Stand der Technik nicht erforderlich ist.

Vorteilhaft ist es, wenn die Aufnahme fest in ein als ringförmiges oder ringsegmentförmiges Betonfertigteil ausgeführtes Turmsegment der Windkraftanlage eingegossen ist. Die Turmsegmente können mittels der Aufnahmen günstig in Einbaulage und ohne die Gefahr von unkontrollierten Bewegungen aufgenommen werden. Die Erfindung ist jedoch auch auf andere Bauteile von Windkraftanlagen wie Gondel oder Rotorblätter anwendbar.

Nach einer vorteilhaften Weiterbildung der Erfindung ist die Aufnahme mit einer Bewehrung des Bauteils, vorzugsweise mit mehreren Bewehrungsstäben, verschweißt. Da sich die Bewehrungsstäbe über die gesamte Länge des Bauteiles erstrecken, kann hierdurch eine besonders gute Lasteinleitung und somit eine sichere Handhabung eines Bauteils erreicht werden.

Vorteilhaft ist es weiterhin, wenn die Aufnahme versenkt in einer horizontalen Kontaktfläche des ringförmigen oder ringsegmentförmigen Betonfertigteils eingegossen ist. Das Eingießen der Aufnahme in der horizontalen Kontaktfläche des Betonfertigteils ermöglicht hierbei in günstiger Weise das Aufnehmen des Bauteils in seiner Einbaulage, was die Montage wesentlich vereinfacht. Insbesondere, wenn bereits der Transport der Bauteile im Wesentlichem in Einbaulage erfolgt, können somit die kritischen Schritte bei einer Drehung von einer liegenden in eine stehende Position vermieden werden. Durch die versenkte Anordnung der Aufnahme kann dennoch eine ebene horizontale Kontaktfläche bereitgestellt werden. Grundsätzlich kann die Aufnahme jedoch auch an einer anderen Stelle, an welcher der Verbleib der Aufnahme den Betrieb der Windkraftanlage nicht beeinträchtigt, angeordnet werden. Beispielsweise ist eine Anordnung der Aufnahme an einer Innenfläche eines ringförmigen oder eines ringsegmentförmigen Betonfertigteils möglich.

Vorteilhafterweise besteht die Aufnahme aus einer Deckplatte mit einer Ausnehmung für den Durchtritt des Verriegelungsbolzens in Öffnungsstellung sowie aus einem Käfig für den aufzunehmenden Verriegelungsbolzen. Die Deckplatte kann hierdurch je nach Lastfall in unterschiedlichen Abmessungen oder Dicken zur Verfügung gestellt werden und ermöglicht hierdurch eine Anpassung an verschiedene Geometrien und Wandstärken der Bauteile oder auch Aufnahmen mit einer massiveren Deckplatte für besonders schwere Bauteile. Der Käfig stellt hierbei sicher, dass der Verriegelungsbolzen aus seiner Öffnungsstellung in seine Verriegelungsstellung drehbar ist.

Nach einer Weiterbildung der Erfindung beinhaltet die Deckplatte mehrere, vorzugsweise vier Bohrungen, in welchen die Bewehrungsstäbe mittels einer Schweißnaht festgelegt sind. Die feste Verbindung der Aufnahme mit der Bewehrung kann hierdurch besonders stabil ausgeführt werden. Zugleich können die Bohrungen beim Verschweißen mit den Bewehrungsstäben eine Positionierhilfe für die Bewehrungsstäbe bilden.

Weiterhin ist es vorteilhaft, wenn in der Verriegelungsstellung Bewehrungsstäbe größeren Durchmessers mit der Aufnahme verschweißt sind. Die Lastabtragung in das Bauteil kann hierdurch weiter verbessert werden.

Vorteilhaft für den sicheren Transport und die sichere Handhabung der Bauteile ist es weiterhin, wenn wenigstens zwei Aufnahmen in das Betonfertigteil eingegossen sind. Es hat sich gezeigt, dass bereits mit zwei Aufnahmen ein Betonfertigteil sicher mittels eines Tragbalkens aufnehmbar ist. Insbesondere bei ringsegmentförmigen Betonfertigteilen, welche als Halbschalen ausgebildet sind, ist die Anordnung von zwei Aufnahmen in dem Betonfertigteil ausreichend. Bei einem Tragbalken sind entsprechend wenigstens zwei Verriegelungsbolzen an dem Tragbalken angeordnet.

Um eine Anpassung an verschiedene Durchmesser der Betonfertigeile bzw. verschiedene Abmessungen der Bauteile der Windkraftanlage zu ermöglichen, ist es vorteilhaft, wenn der Abstand der Verriegelungsbolzen an dem Tragbalken einstellbar ist. Hierzu ist es vorteilhaft, wenn zumindest ein Verriegelungsbolzen in Längsrichtung des Tragbalkens verschiebbar an dem Tragbalken angeordnet ist. Selbstverständlich ist es ebenso möglich, zwei Verriegelungsbolzen an dem Tragbalken vorzusehen, welche dann beide verschiebbar an dem Tragbalken angeordnet sind. Es können jedoch auch mit fest an dem Tragbalken angebrachten Verriegelungsbolzen Bauteile verschiedener Abmessungen aufgenommen werden, wenn die Aufnahmen bei verschiedenen Bauteilen jeweils in den gleichen Abständen an den Bauteilen angeordnet sind.

Nach einer besonders vorteilhaften Weiterbildung des Tragbalkens ist der oder sind die Verriegelungsbolzen mittels eines Antriebs in Längsrichtung des Tragbalkens verfahrbar. Die Anpassung an verschiedene Abstände der Aufnahmen bzw. verschiedene Abmessungen der aufzunehmenden Bauteile muss dann nicht mehr manuell durchgeführt werden, sondern kann durch das Verfahren der Verriegelungsbolzen bewerkstelligt werden. Besonders vorteilhaft ist es hierbei, wenn der Antrieb für das Verfahren der Verriegelungsbolzen fernsteuerbar ist, so dass eine Einstellung auch von der Krankabine aus oder auch vollautomatisch erfolgen kann.

Nach einer anderen Weiterbildung der Erfindung ist zum Verdrehen der Verriegelungsbolzen zwischen der Öffnungsstellung und der Verriegelungsstellung ebenfalls ein elektrischer oder hydraulischer Antrieb in dem Tragbalken vorgesehen. Das Absenken des Tragbalkens in Richtung des Bauteils sowie das Sperren der Verriegelungsbolzen durch die Drehbewegung kann hierbei ebenfalls in vorteilhafter Weise vom Kranführer aus der Kabine gesteuert werden.

Um den Durchtritt der Verriegelungsbolzen in Öffnungsstellung zu erleichtern, ist es weiterhin vorteilhaft, wenn der Verriegelungsbolzen mittels eines elektrischen oder hydraulischen Antriebs in axialer Richtung verstellbar ist. Das Absenken des gesamten Tragbalkens zum Durchtreten der Verriegelungsbolzen ist hierdurch nicht mehr erforderlich. Auch das Einklinken der Verriegelungsbolzen in die Aufnahme kann somit in vorteilhafter Weise von der Krankabine aus gesteuert werden.

Bei einem Bauteil mit mehreren Aufnahmen ist es weiterhin vorteilhaft, wenn die Aufnahmen eines Bauteils in einer Linie oder parallel zueinander orientiert, bezogen auf die Ausnehmung zur Verbindung mit dem Bolzen, in das Bauteil eingegossen sind. Die Positionierung und Aufnahme des Bauteils mittels des Tragbalkens bzw. eines Hebezeugs ist hierdurch besonders einfach möglich, da das Bauteil auch in einer um 180° verdrehten Position in gleicher Weise aufgenommen werden kann.

Weiterhin ist es vorteilhaft, wenn die horizontalen Kontaktflächen des ringförmigen oder ringsegmentförmigen Betonfertigteils überschliffen sind. Das hochgenaue Überschleifen der horizontalen Kontaktflächen ermöglicht den Aufbau eines Turms aus ringförmigen oder ringsegmentförmigen Betonfertigteilen ohne aufwändige Ausrichtearbeiten sowie ohne die Annordnung von Vergussmitteln zwischen den einzelnen Bauteilen. Dadurch, dass die Aufnahmen versenkt in die horizontale Kontaktfläche eingegossen sind, ist das Überschleifen der Kontaktflächen nach dem Gießen problemlos möglich.

Weitere Vorteile der Erfindung werden anhand der nachfolgend dargestellten Ausführungsbeispiele beschrieben. Es zeigen:
- **Figur 1**: ein erfindungsgemäßes Bauteil einer Windkraftanlage mit darin eingegossenen Aufnahmen,
- **Figur 2**: eine Aufnahme, welche mit Bewehrungsstäben verscheißt ist, in einer schematischen Schnittdarstellung und in einer Draufsicht,
- **Figur 3**: eine alternative Ausführungsform der Aufnahme in einer schematischen Schnittdarstellung und in einer Draufsicht,
- **Figur 4**: ein ringsegmentförmiges Bauteil einer Windkraftanlage, welches mit zwei Aufnahmen entsprechend der Figur 2 versehen ist,
- **Figur 5**: einen erfindungsgemäßen Tragbalken mit Verriegelungsbolzen, sowie
- **Figur 6**: eine weitere Ausführungsform eines Tragbalkens.

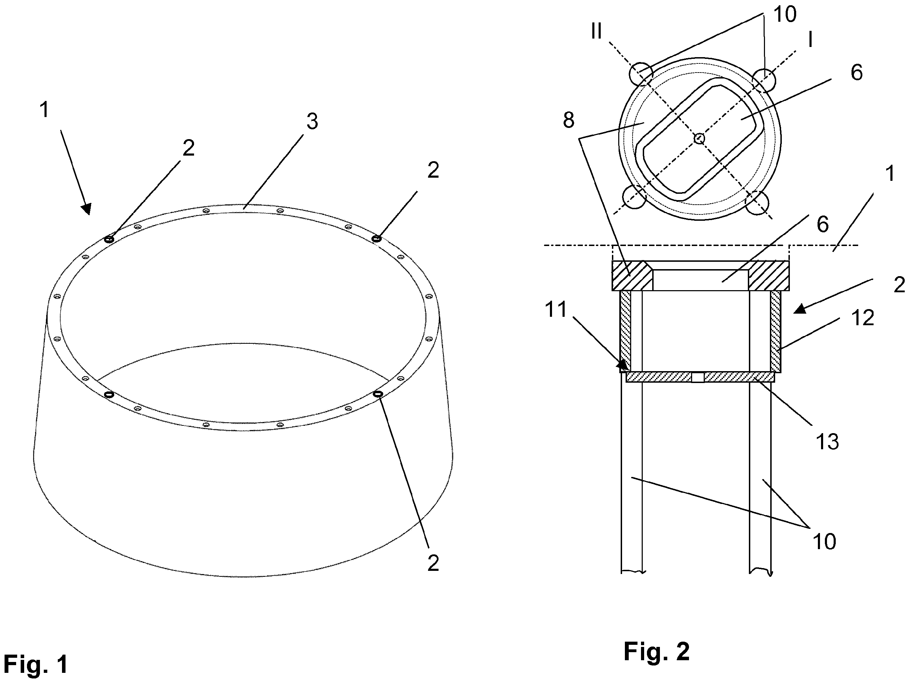

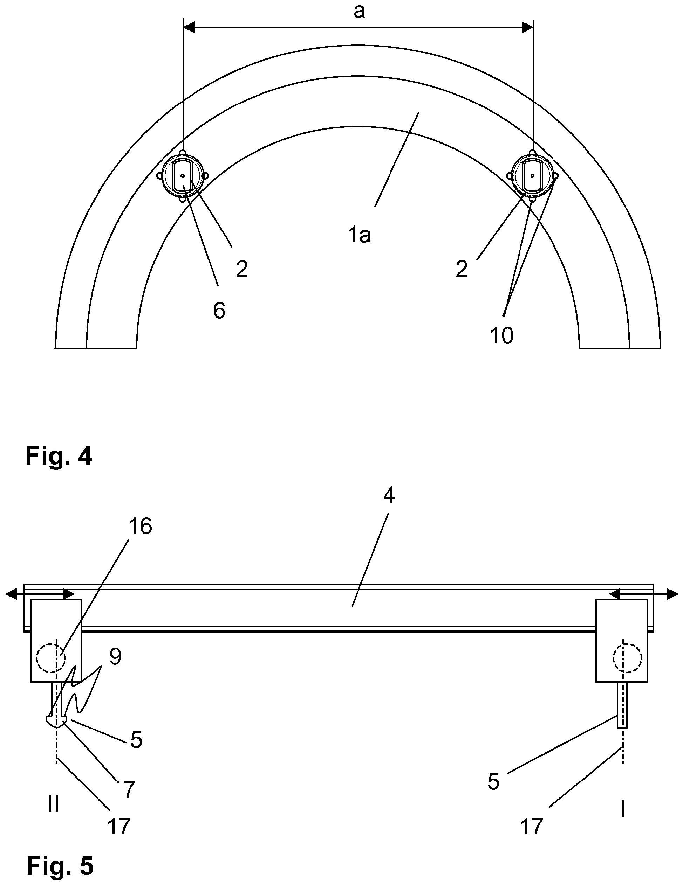

Figur 1 zeigt ein erfindungsgemäßes Bauteil einer Windkraftanlage, welches vorliegend ein ringförmiges Turmsegment ist. Das Turmsegment ist als ringförmiges Betonfertigteil 1 ausgeführt und ist vorliegend als konischer Betonring ausgeführt. Zum Aufbau einer Windkraftanlage werden eine Vielzahl derartiger konischer oder zylindrischer Betonfertigteile 1 auf einem Fundament übereinander gesetzt und miteinander verbunden. Die Betonfertigteile 1 können hierbei, wie vorliegend dargestellt. einteilig als ringförmige Betonfertigteile 1 ausgeführt sein oder, wie in Figur 4 ersichtlich, als ringsegmentförmige Betonfertigteile 1a, von welchen zwei oder mehrere zu einem Betonring zusammengesetzt werden. Nach dem Aufeinandersetzen der Betonfertigteile 1 werden diese durch Spannglieder, welche vorzugsweise extern angeordnet sind, miteinander verbunden. Aufgrund der Abmessungen derartiger Betonfertigteile 1, welche Durchmesser von 12 Metern und Gewichte bis zu 100 Tonnen erreichen können, stellt nicht nur der Transport der vorgefertigten Betonfertigteile zum Montageort 1, sondern auch die Handhabung der Betonfertigteile 1 während der Herstellung und der Montage große Herausforderungen.

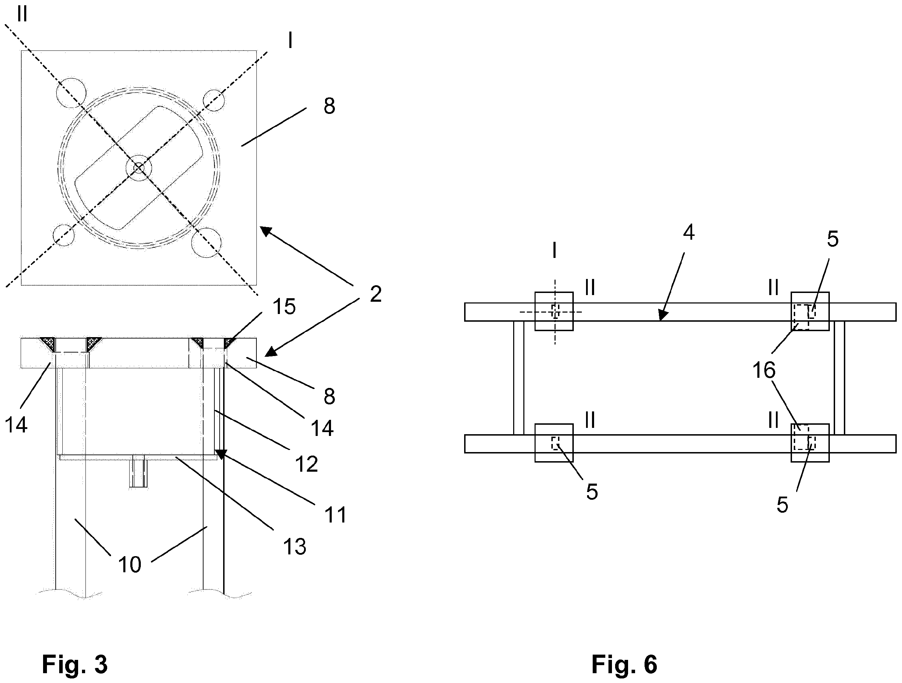

Um die Turmsegmente während des Transports und der Montage sicher mittels eines Krans aufnehmen zu können, ist daher erfindungsgemäß vorgesehen, dass eine Aufnahme 2 zur Handhabung des Bauteils fest in dem Bauteil angeordnet ist. Vorliegend sind bei einem als ringförmiges Betonfertigteil 1 ausgeführten Turmsegment vier Aufnahmen 2 direkt in das Bauteil eingegossen. Bei kleineren ringförmigen Turmsegmenten ist es jedoch bereits ausreichend, nur zwei Aufnahmen 2 einzugießen. Durch das direkte Eingießen der Aufnahme 2 in das Bauteil kann eine gute Verbindung der Aufnahme mit dem Betonfertigteil 1 erreicht werden und somit beim Anheben des Bauteils eine gute Lasteinleitung in das Bauteil erzielt werden. Wie vorliegend dargestellt, sind die Aufnahmen 2 in einer horizontalen Kontaktfläche 3 des Betonfertigteils 1 eingegossen, so dass das Bauteil direkt in seiner Einbaulage transportiert werden kann. Vorliegend ist vorgesehen, das Betonfertigteil 1 mittels eines Tragbalkens 4 (siehe Figur 5 und 6) zu heben. Der Tragbalken 4 weist hierzu Verriegelungsbolzen 5 auf, welche mit den Aufnahmen 2 verbindbar sind.

Die Verbindung der Verriegelungsbolzen 5 mit den Aufnahmen 2 erfolgt nach einer vorteilhaften Ausführung der Erfindung, welche vorliegend dargestellt ist, durch ein Verdrehen des Verriegelungsbolzens 5 um seine vertikale Achse. Der Verriegelungsbolzen 5 ist hierdurch zwischen einer Öffnungsstellung I, in welcher er in die Aufnahme 2 einbringbar ist und einer Verriegelungsstellung II, in welche die Verbindung belastbar ist, verstellbar. Die Aufnahme 2 weist daher ebenfalls eine Öffnungsstellung I sowie eine im Wesentlichen um 90° zu der Öffnungsstellung I versetze Verriegelungsstellung II auf.

Die Öffnungs- und Verriegelungsstellung I, II der Aufnahme 2 ist beispielsweise in der Draufsicht in Figur 2 ersichtlich. Die Öffnungsstellung I der Aufnahme 2 ist hierbei durch eine längliche Ausnehmung 6 definiert, in welche der Verriegelungsbolzen 5 in seiner Öffnungsstellung I (vgl. hierzu Figur 4), in welcher er ebenfalls einen länglichen Querschnitt aufweist, einbringbar ist. Sobald sich der Verriegelungsbolzen 5 mit seinem Verriegelungsteil 7 unterhalb einer Deckplatte 8 befindet, kann er zum Verriegeln um 90° gedreht werden, so dass eine Lastaufnahme über die Stützflächen 9 sowie die Deckplatte 8 und somit ein Anheben der Last möglich ist.

Figur 2 zeigt eine besonders vorteilhafte Ausführung der Erfindung, bei welcher die Aufnahme 2 mit einer Bewehrung des Bauteils, vorliegend mit mehreren Bewehrungsstäben 10, verschweißt ist. Durch das direkte Verschweißen der Aufnahme 2 mit den Bewehrungsstäben 10 kann eine besonders günstige Krafteinleitung in das Bauteil erreicht werden, so dass auch sehr schwere Bauteile sehr sicher aufgenommen werden können. Vorliegend sind insgesamt vier Bewehrungsstäbe 10 mit der Aufnahme 2 verschweißt. Die Ausnehmung 6 ist hierbei derart orientiert, dass in der um 90° versetzen Verriegelungsstellung II eine Lastabtragung über die Bewehrungsstäbe 10 erfolgen kann.

Wie der Figur 2 weiterhin entnehmbar, weist die Aufnahme 2 unterhalb der Deckplatte 8 einen Käfig 11 für die Aufnahme des Verriegelungsbolzens 5 auf. Der Käfig 11 ist vorliegend aus einem zylinderförmigen Bauteil 12 sowie einer Bodenplatte 13 zusammengesetzt, welche durch Schweißnähte miteinander verbunden sind. Der gesamte Käfig 11 ist ebenfalls mit der Deckplatte 8 verschweißt. Andere, beispielsweise einteilige Ausführungen des Käfigs, beispielsweise als Tiefziehteil, sind jedoch ebenfalls möglich.

Eine Aufnahme 2 mit angeschweißten Bewehrungsstäben kann in sehr einfacher Weise ohne zusätzlichen Aufwand bei der Herstellung der Betonfertigteile 1 miteingegossen werden. Die Befestigung von Lastaufnahmeeinrichtungen sowie die spätere Entfernung dieser Lastaufnahmeeinrichtungen nach erfolgter Montage kann durch die direkt eingegossene und mit der Bewehrung verschweiße Aufnahme 2 vermieden werden. Die Montage der Betonfertigteile 1 am Einaubort kann daher in einfacher und zeitsparender Weise erfolgen.

Die Aufnahmen 2 sind versenkt in der horizontalen Kontaktfläche 3 des Betonfertigteils 1 eingegossen, wie bei dem in Figur 2 durch eine Strichpunktlinie angedeuteten Betonfertigteil 1 ersichtlich. Vorteilhaft ist eine um etwa einen Zentimeter versenkte Anordnung. Die Betonfertigteile 1 können daher trotz der eingegossenen Aufnahmen 2 in herkömmlicher Weise übereinander angeordnet werden. Besonders vorteilhaft ist, dass durch die versenkt eingegossenen Aufnahmen 2 die horizontalen Kontaktflächen 3 der Betonfertigteile 1 überarbeitet, beispielsweise überschliffen werden können. Das hochgenaue Überschleifen der horizontalen Kontaktflächen 3 ermöglicht es, die übereinander angeordneten Betonfertigteile 1 ohne Anordnung eines Vergussmittels lediglich durch das Aufbringen einer Vorspannung durch Spannglieder miteinander zu verbinden. Das versenkte Eingießen der Aufnahmen 2 ist daher besonders vorteilhaft. Je nach Art der Montage des Turms ist es jedoch ebenfalls denkbar, die Aufnahmen 2 bündig mit der oberen horizontalen Kontaktfläche 3 einzugießen.

Figur 3 zeigt eine alternative Ausführung der Aufnahme 2, bei welcher die Deckplatte 8 mehrere Bohrungen, vorliegend vier Bohrungen 14, aufweist. Wie der Figur entnehmbar, sind die Bewehrungsstäbe 10 durch die Bohrungen 14 aufgenommen und sind in diesen mittels einer Schweißnaht 15 verschweißt. Durch die Aufnahme der Bewehrungsstäbe 10 in den Bohrungen 14 können die Bewehrungsstäbe 10 zugleich für den Schweißvorgang positioniert werden, so dass die Herstellung weiter vereinfacht ist. Wie der Draufsicht der Figur 3 entnehmbar, sind hierbei bei der Verriegelungsstellung II der Aufnahme 2 Bewehrungsstäbe 10 größeren Durchmessers vorgesehen, wodurch die Lastabtragung in der Verriegelungsstellung weiter verbessert wird.

Figur 4 zeigt ein ringsegmentförmiges Betonfertigteil 1a, in welches zwei Aufnahmen 2 nach der Figur 2 in die horizontale Kontaktfläche 3 eingegossen sind. Gezeigt ist das Betonfertigteil 1a in einer schematischen Draufsicht. Wie der Figur entnehmbar, ist es für ein ringsegmentförmiges Betonfertigteil 1a ausreichend, lediglich zwei Aufnahmen 2 in das Betonfertigteil einzugießen. Die Aufnahmen 2 sind hierbei parallel zueinander orientiert in das Bauteil eingegossen. Die Aufnahme des Bauteils 1a mittels des Tragbalkens 4 ist hierdurch vereinfacht, da dieses sowohl ich der gezeigten Position als auch um 180° verdreht aufgenommen werden kann.

Figur 5 zeigt einen Tragbalken 4 zur Handhabung der Bauteile einer Windkraftanlage, welcher vorliegend mit zwei Verriegelungsbolzen 5 versehen ist. Die Verriegelungsbolzen 5 sind vorzugsweise in Längsrichtung des Tragbalkens 4 verschiebbar an dem Tragbalken 4 angeordnet, wie in Figur 5 durch die Doppelpfeile symbolisiert. Hierdurch ist es möglich, eine Anpassung an verschiedene Durchmesser der Betonfertigteile 3 zu ermöglichen. Ebenso ist es jedoch auch möglich, die Aufnahmen 2 auch bei verschieden großen Betonfertigteilen 1 stets in demselben Abstand a in die Bauteile einzugießen. Eine Verschiebbarkeit der Verriegelungsbolzen 5 ist somit nicht unbedingt erforderlich. Weiterhin kann es auch ausreichend sein, lediglich einen einzelnen Verriegelungsbolzen 5 verschiebbar an dem Tragbalken 4 anzuordnen. Nach einer vorteilhaften Weiterbildung ist es auch möglich, die Verriegelungsbolzen 5 mittels eines Antriebs (hier nicht dargestellt) verfahrbar an dem Tragbalken 4 anzuordnen.

Vorliegend ist weiterhin jeder Verriegelungsbolzen 5 mittels eines Antriebs 16, welcher beispielsweise als elektrischer oder hydraulischer Antrieb 16 ausgebildet sein kann, aus seiner Öffnungsstellung I in die Verriegelungsstellung II um seine vertikale Achse 17 drehbar. Zur besseren Darstellung ist in Figur 5 jeweils ein Verriegelungsbolzen 5 in Öffnungsstellung I und ein Verriegelungsbolzen 5 in Verriegelungsstellung II dargestellt. Zum Handhaben eines ringsegmentförmigen Betonfertigteils 1a wird der Tragbalken 4 mittels eines Krans aufgenommen und über dem Betonfertigteil 1a positioniert. Zur Positionierung des Tragbalkens 4 können Positionierhilfsmittel an dem Tragbalken 4 angeordnet sein. Anschließend wird der Tragbalken 4 abgesenkt, wobei die sich in Öffnungsstellung I befindlichen Verriegelungsbolzen 5 in die Ausnehmungen 6 der Aufnahmen 2 eingreifen und dort durch Betätigen der Antriebe 16 verriegelt werden können.

Besonders vorteilhaft ist es, wenn die Antriebe 16, sowie gegebenenfalls weiter Antriebe zum Verfahren der Verriegelungsbolzen 5, fernsteuerbar sind, so dass sämtliche Bewegungen voll automatisch gesteuert werden können. Ebenso ist eine Steuerung von der Krankabine aus möglich. Die nun aufgenommenen ringsegmentförmigen Betonfertigteile 1a können mittel des Tragbalkens 4 zu einem Montageplatz gebracht werden, an welchem jeweils zwei ringsegmentförmige Betonfertigteile 1a zu einem Betonring zusammengesetzt werden können. Dieser Betonring weist dann ebenso wie ein ringförmiges Betonfertigteil 1 (siehe Figur 1) vier Aufnahmen 2 auf und kann mittels eines Tragbalkens 4 mit vier Verriegelungsbolzen 5, wie in Figur 6 dargestellt, aufgenommen werden und am Montageort des Turms angeordnet werden.

Nach einer nicht dargestellten Ausführungsform kann ein weiterer Antrieb vorgesehen sein, welcher eine Verstellung der Verriegelungsbolzen 5 in Richtung der vertikalen Achse 17 der Verriegelungsbolzen 5 ermöglicht. Das Einbringen der Verriegelungsbolzen 5 in die Ausnehmungen 6 kann hierdurch erleichtert werden, da ein Absenken des gesamten Tragbalkens 5 zum Verriegeln nicht mehr erforderlich ist.

Die Erfindung ist nicht auf die dargestellten Ausführungsbeispiele beschränkt. So können Aufnahmen 2 nicht nur in Betonfertigteile 1 eingegossen werden, um diese zu handhaben, sondern es ist ebenso möglich, die Aufnahmen 2 fest mit anderen Bauteilen einer Windkraftanlage, wie beispielsweise Rotorblättern, der Nabe oder der Gondel zu verbinden. Weiterhin können auch anders gestaltete Aufnahmen 2 bzw. andere Verbindungen mit einem Tragbalken 4 vorgesehen sein. Wesentlich ist hierbei lediglich, dass die Aufnahmen 2 schwerpunktsgünstig und fest, d. h. nicht lösbar, mit den Bauteilen verbunden sind, um ein sicheres Anheben der Last zu ermöglich und andererseits das aufwändige Montieren und Demontieren spezieller Lastaufnahmevorrichtungen zu vermeiden. Weitere Abwandlungen im Rahmen der Patentansprüche fallen ebenfalls unter die Erfindung.

### Bezugszeichenliste

- 1: Betonfertigteil
- 1a: ringsegmentförmiges Betonfertigteil
- 2: Aufnahme
- 3: horizontale Kontaktfläche
- 4: Tragbalken
- 5: Verriegelungsbolzen
- 6: Ausnehmung
- 7: Verriegelungsteil
- 8: Deckplatte
- 9: Stützflächen
- 10: Bewehrungsstäbe
- 11: Käfig
- 12: Zylinder
- 13: Bodenplatte
- 14: Bohrungen
- 15: Schweißnaht
- 16: Antrieb
- 17: Vertikale Achse
- a: Abstand
- I: Öffnungsstellung
- II: Verriegelungsstellung

## Patentansprüche

1. Bauteil einer Windkraftanlage, insbesondere Turmsegment einer Windkraftanlage, mit einer Aufnahme (2) zur Handhabung des Bauteils nach der Herstellung und bei der Montage, welche mit einem an einem Tragbalken (4) angeordneten Verriegelungsbolzen (5) zu einer Verbindungsvorrichtung verbindbar ist, wobei die Aufnahme (2) einen durch eine Ausnehmung (6) definierten Öffnungsbereich (I) für den Durchtritt des Verriegelungsbolzens (5) sowie einen im Wesentlichen um 90° zu dem Öffnungsbereich (I) versetzten Verriegelungsbereich (II) mit einem Käfig (11) für den aufzunehmenden Verriegelungsbolzen (5) aufweist und fest mit dem Bauteil der Windkraftanlage verbunden ist, wobei die Aufnahme (2) mit einer Bewehrung des Bauteils, verschweißt ist.

2. Bauteil nach dem vorhergehenden Anspruch, **dadurch gekennzeichnet, dass** die Aufnahme (2) in ein als ringförmiges oder ringsegmentförmiges Betonfertigteil (1, 1a) ausgeführtes Turmsegment der Windkraftanlage eingegossen ist.

3. Bauteil nach dem vorhergehenden Anspruch, **dadurch gekennzeichnet, dass** die Aufnahme (2) mit mehreren Bewehrungsstäben (10) des Bauteils verschweißt ist.

4. Bauteil nach einem der vorhergehenden Ansprüche, **dadurch gekennzeichnet, dass** die Aufnahme (2) versenkt in einer horizontalen Kontaktfläche (3) des ringförmigen oder ringsegmentförmigen Betonfertigteils (1, 1a) eingegossen ist.

5. Bauteil nach einem der vorhergehenden Ansprüche, **dadurch gekennzeichnet, dass** die Aufnahme (2) eine Deckplatte (8) mit einer Ausnehmung (6) für den Durchtritt des Verriegelungsbolzens (5) in Öffnungsstellung (I) sowie einen Käfig (11) für den aufzunehmenden Verriegelungsbolzen (5) aufweist.

6. Bauteil nach einem der vorhergehenden Ansprüche, **dadurch gekennzeichnet, dass** die Deckplatte (8) mehrere, vorzugsweise vier, Bohrungen (14) beinhaltet, in welchen die Bewehrungsstäbe (10) verschweißt sind.

7. Bauteil nach einem der vorhergehenden Ansprüche, **dadurch gekennzeichnet, dass** in der Verriegelungsstellung (II) Bewehrungsstäbe (10) größeren Durchmessers mit der Aufnahme (2) verschweißt sind.

8. Bauteil nach einem der vorhergehenden Ansprüche, **dadurch gekennzeichnet, dass** wenigstens zwei Aufnahmen (2) in das Betonfertigteil (1, 1a) eingegossen sind.

9. Bauteil nach einem der vorhergehenden Ansprüche, **dadurch gekennzeichnet, dass** die Aufnahmen (2) eines Bauteils in einer Linie oder parallel zueinander orientiert in das Bauteil eingegossen sind.

10. Bauteil nach einem der vorhergehenden Ansprüche, **dadurch gekennzeichnet, dass** die horizontale Kontaktfläche (3) des ringförmigen oder ringsegmentförmigen Betonfertigteils (1, 1a) überschliffen ist.

11. Tragbalken (4) zur Handhabung von Bauteilen einer Windkraftanlage bei der Montage, insbesondere von Turmsegmenten einer Windkraftanlage, mit einem Verriegelungsbolzen (5), welcher mit einer an dem Bauteil angeordneten Aufnahme (2) zu einer Verbindungsvorrichtung verbindbar ist, **dadurch gekennzeichnet, dass** zur Verriegelung der Verbindungsvorrichtung der Verriegelungsbolzen (5) zwischen einer Öffnungsstellung (I) und einer im Wesentlichen um 90° zu der Öffnungsstellung (I) versetzten Verriegelungsstellung (II) um seine vertikale Achse (17) drehbar ist.

12. Tragbalken nach einem der vorhergehenden Ansprüche, **dadurch gekennzeichnet, dass** wenigstens zwei Verriegelungsbolzen (5) an dem Tragbalken (4) angeordnet sind und der Abstand (a) der Verriegelungsbolzen (5) einstellbar ist.

13. Tragbalken nach einem der vorhergehenden Ansprüche, **dadurch gekennzeichnet, dass** wenigstens ein Verriegelungsbolzen (5) in Längsrichtung des Tragbalkens (4) verschiebbar an dem Tragbalken (4) angeordnet ist, vorzugsweise mittels eines Antriebs in Längsrichtung des Tragbalkens (4) verfahrbar ist.

14. Tragbalken nach einem der vorhergehenden Ansprüche, **dadurch gekennzeichnet, dass** der Verriegelungsbolzen (5) mittels eines elektrischen oder hydraulischen, insbesondere fernsteuerbaren, Antriebs (16) zwischen der Öffnungsstellung (I) und der Verrieglungsstellung (II) um seine vertikale Achse (17) drehbar ist.

15. Tragbalken nach einem der vorhergehenden Ansprüche, dadurch genkennzeichnet, dass der Verriegelungsbolzen (5) mittels eines elektrischen oder hydraulischen Antriebs in axialer Richtung verstellbar ist.

## Claims

1. A component of a wind power plant, particularly a tower segment of a wind power plant, having a receptacle (2) for handling the component after manufacturing and during installation and for connecting to a locking pin (5) disposed on a support beam (4), thus forming a connecting device, wherein the receptacle (2) comprises an opening region (I) defined by a cutout (6) for the locking pin (5) to pass through and comprises a locking region (II) offset from the opening region (I) by substantially 90° and having a cage (11) for the locking pin (5) being received, said receptacle being fixedly connected to the component of the wind power plant, wherein the receptacle (2) is welded to a reinforcement of the component.

2. The component according to the preceding claim, **characterized in that** the receptacle (2) is cast in a tower segment of the wind power plant implemented as an annular or annular segment prefabricated concrete element (1, 1a).

3. The component according to the preceding claim, **characterized in that** the receptacle (2) is welded to a plurality of reinforcement bars (10) of the component.

4. The component according to any one of the preceding claims, **characterized in that** the receptacle (2) is cast in as a recess in a horizontal contact surface (3) of the annular or annular segment prefabricated concrete element (1, 1a).

5. The component according to any one of the preceding claims, **characterized in that** the receptacle (2) comprises a cover plate (8) having a recess (6) for the locking pin (5) to pass through in the opening position (I) and a cage (11) for the locking pin (5) being received.

6. The component according to any one of the preceding claims, **characterized in that** the cover plate (8) contains a plurality of holes (14), preferably four, in which the reinforcing bars (10) are welded.

7. The component according to any one of the preceding claims, **characterized in that** reinforcing bars (10) of larger diameter are welded to the receptacle (2) in the locking position (II).

8. The component according to any one of the preceding claims, **characterized in that** at least two receptacles (2) are cast in the prefabricated concrete element (1, 1a).

9. The component according to any one of the preceding claims, **characterized in that** the receptacles (2) of a component are cast in a line or oriented parallel to each other in the component.

10. The component according to any one of the preceding claims, **characterized in that** the horizontal contact surface (3) of the annular or annular segment prefabricated concrete element (1, 1a) is finished by grinding.

11. A support beam (4) for handling components of a wind power plant during installation, particularly tower segments of a wind power plant, having a locking pin (5) for connecting to a receptacle (2) disposed on the component for forming a connecting device, **characterized in that** the locking pin (5) can be rotated about the vertical axis (17) thereof between an opening position (I) and a locking position (II) offset by substantially 90° from the opening position (I) for locking the connecting device.

12. The support beam according to any one of the preceding claims, **characterized in that** at least two locking pins (5) are disposed on the support beam (4) and the spacing (a) of the locking pins (5) is adjustable.

13. The support beam according to any one of the preceding claims, **characterized in that** at least one locking pin (5) is disposed on the support beam (4) for displacing in the longitudinal direction of the support beam (4), preferably for displacing by means of a drive in the longitudinal direction of the support beam (4).

14. The support beam according to any one of the preceding claims, **characterized in that** the locking pin (5) can be rotated about the vertical axis (17) thereof between the opening position (I) and the locking position (II) by means of an electric or hydraulic drive (16), preferably remotely controlled.

15. The support beam according to any one of the preceding claims, **characterized in that** the locking pin (5) can be adjusted in the axial direction by means of an electric or hydraulic drive.

## Revendications

1. Élément de construction d'une centrale éolienne, en particulier segment de tout d'une centrale éolienne, avec un logement (2) pour manier l'élément de construction après la fabrication et lors du montage, lequel peut être raccordé avec un doigt de verrouillage (5) sur une poutre porteuse (4) pour former un dispositif de connexion, sachant que le logement (2) présente une zone d'ouverture (I) définie par un évidement (6) pour le passage du doigt de verrouillage (5) ainsi qu'une zone de verrouillage (II) essentiellement décalée de 90° par rapport à la zone d'ouverture (I), avec une cage (11) pour le doigt de verrouillage (5) devant être accueilli et qu'il est rigidement relié avec l'élément de construction de la centrale éolienne, sachant que le logement (2) est soudé avec une armature de l'élément de construction.

2. Élément de construction selon la revendication précédente, **caractérisé en ce que** le logement (2) est coulé dans un segment de tour de la centrale éolienne réalisé sous forme d'élément préfabriqué en béton (1, 1a) annulaire ou en forme de segment annulaire.

3. Élément de construction selon la revendication précédente, **caractérisé en ce que** le logement (2) est soudé avec plusieurs barres d'armature (10) de l'élément de construction.

4. Élément de construction selon l'une des revendications précédentes, **caractérisé en ce que** le logement (2) est coulée noyée dans une surface de contact horizontale (3) de l'élément de construction préfabriqué en béton (1, 1a) annulaire ou en forme de segment annulaire.

5. Élément de construction selon l'une des revendications précédentes, **caractérisé en ce que** le logement (2) compte une plaque de recouvrement (8) avec un évidemment (6) pour le passage du doigt de verrouillage (5) dans la position d'ouverture (I) ainsi qu'une cage (11) pour le doigt de verrouillage devant être accueilli (5).

6. Élément de construction selon l'une des revendications précédentes, **caractérisé en ce que** la plaque de recouvrement (8) contient plusieurs, de préférence quatre alésages (14), dans lesquels les barres d'armature (10) sont soudées.

7. Élément de construction selon l'une des revendications précédentes, **caractérisé en ce que** dans la position de verrouillage (II), les barres d'armature (10) d'un plus grand diamètre sont soudées avec le logement (2).

8. Élément de construction selon l'une des revendications précédentes, **caractérisé en ce que** deux logements (2) au moins sont coulés dans l'élément préfabriqué en béton (1, 1a).

9. Élément de construction selon l'une des revendications précédentes, **caractérisé en ce que** les logements (2) d'un élément de construction sont coulés dans l'élément de construction en une ligne ou orientés en parallèle les uns aux autres.

10. Élément de construction selon l'une des revendications précédentes, **caractérisé en ce que** la surface de contact horizontale (3) de l'élément de construction préfabriqué en béton (1, 1a) annulaire ou en forme de segment annulaire est surmeulée ultérieurement.

11. Poutre porteuse (4) pour le maniement d'éléments de construction d'une centrale éolienne lors du montage, en particulier de segments de tour d'une centrale éolienne, avec un doigt de verrouillage (5), lequel peut être raccordé avec un logement (2) disposé sur l'élément de construction pour former un dispositif de connexion, **caractérisée en ce que** pour le verrouillage du dispositif de connexion, le doigt de verrouillage (5) est rotatif autour de son axe vertical (17) entre une position d'ouverture (I) et une position de verrouillage (II) essentiellement décalée de 90° par rapport à la position d'ouverture (I).

12. Poutre porteur selon l'une des revendications précédentes, **caractérisée en ce que** deux doigts de verrouillage (5) au moins sont disposé sur la poutre porteuse (4) et la distance (a) des doigts de verrouillage (5) est réglable.

13. Poutre porteur selon l'une des revendications précédentes, **caractérisée en ce qu'**un doigt de verrouillage (5) au moins est disposé sur la poutre porteuse (4) de manière déplaçable dans le sens longitudinal de la poutre porteuse (4), qu'il est de préférence déplaçable au moyen d'un entraînement dans le sens longitudinal de la poutre porteuse (4).

14. Poutre porteur selon l'une des revendications précédentes, **caractérisée en ce que** le doigt de verrouillage (5) peut être tourné autour de son axe vertical (17) à l'aide d'un entraînement (16) électrique ou hydraulique, en particulier télécommandable, entre la position d'ouverture (I) et la position de verrouillage (II).

15. Poutre porteur selon l'une des revendications précédentes, **caractérisée en ce que** le doigt de verrouillage (5) est déplaçable dans le sens axial à l'aide d'un entraînement électrique ou hydraulique.
